# EUROPEAN PATENT SPECIFICATION

(11) **EP 4 529 764 B1**
(45) Date of publication and mention of the grant of the patent: **18.03.2026**
(21) Application number: 24202798.5
(22) Date of filing: 26.09.2024
(51) Int. Cl.: A01M 7/00

(54) **AGRICULTURAL SPRAYER**
FELDSPRITZE
PULVÉRISATEUR AGRICOLE

(30) Priority: 26.09.2023 IT 202300019869
(43) Date of publication of application: 02.04.2025
(73) Proprietor: Altek GmbH, 72108 Rottenburg (DE)
(72) Inventor: TIGGES, Rudolf, 72813 St. Johann (DE)
(74) Representative: Gallo, Luca

(56) References cited:
- EP-A1- 2 995 382
- US-A1- 2009 134 237
- US-A1- 2020 353 494
- US-B2- 10 444 048

## Description

### Field of application

The present invention regards a machine, a method and a spray group for spraying liquids products for agriculture, according to the preamble of the respective independent claims.

The present invention is inserted in the context of the industrial field of production of farming machines and/or accessories for farming machines.

In particular, by means of the present invention, it is possible to distribute liquid products on a farming terrain, in particular for spraying, fertilization or disinfestation of the cultivations.

### State of the art

As is known, known on the market are farming machines arranged for spraying the fields to be cultivated with suitable liquids, whether these are only water for irrigating, or fertilizers, weedkillers, herbicides and the like.

Such machines carry, mounted thereon, a spray bar placed in fluid communication with a tank of liquid to be sprayed, and on such spray bar a plurality of distribution nozzles are mounted which are arranged for distributing, in a manner as uniform as possible, the liquid on the field to be cultivated.

In the event in which one of the nozzles remains damaged or is obstructed during use, the liquid will be distributed in a non-uniform manner on the field to be cultivated.

The spray bars have considerable length and, therefore, for the operator driving the machine it might be difficult to realize that there is a malfunction of one of the many nozzles placed along the same spray bar.

In order to make sure that the operating driving the machine becomes aware of the malfunction of one of the nozzles, preventing the consequent non-uniform spraying of the terrain to be cultivated, known from the patent WO 2013/025378 is a monitoring system for monitoring the operation of the aforesaid nozzles.

In particular, such system comprises a magnetic flow meter for each nozzle, and such flow meter is placed within the corresponding nozzle and is arranged for measuring the liquid flow that traverses the latter, and an electronic control unit, which is arranged for monitoring the liquid flow measured by each flow meter and emitting an alarm signal if the aforesaid measured liquid flow is different from that set.

In this manner, the operator driving the machine can be warned as to which nozzle does not operate and he/she can execute a maintenance intervention aimed to substitute the damaged or obstructed nozzle with a new operating nozzle. However, the machine with the monitoring system described in the aforesaid patent of the prior art in practice has shown that it does not lack drawbacks.

In particular, the aforesaid monitoring system is particularly costly, since, for machines having spray bars that are particularly long, a particularly high number of flow meters is requested, one for each nozzle being provided for.

In addition, the arrangement of the flow meters themselves within each nozzle increases the risk that the nozzle remains accidentally obstructed. Indeed, the nozzle shown in WO 2013/025378 is provided with an external toroidal duct placed in fluid communication with the spray bar, an internal duct extended within the external toroidal duct and placed in fluid communication, on one side, with the placed in fluid communication and, on the other side, with the dispensing mouth of the nozzle and, in addition, the magnetic flow meter is provided with a magnetic turbine placed in the internal duct. Hence, since the internal duct is inevitably provided with section with limited size and the turbine occupies a considerable part of such section, it is easy that solid residues transported in suspension by the liquid to be dispensed can be deposited on the turbine and blocking the internal duct.

In addition, such monitoring system is particularly complex from a production standpoint, since it is complicated to mount a flow meter within each single nozzle, and is computationally inefficient, since the system must at the same time process a great amount of data generated by the great quantity of flow meters in order to be able to monitor the correct operation of the nozzles. Relevant prior art in the field are also the documents: EP 2 995 382 A1, US 2020/353494 A1, US 2009/134237 A1, US 10 444 048 B2.

### Presentation of the invention

The main object of the present invention is therefore that of overcoming the drawbacks manifested by the solutions of known type, by providing a machine, a method and a spray group for spraying liquids products for agriculture, which are capable of safely warning of the malfunctioning of one or more nozzles. Another object of the present invention is to provide a machine, a method and a spray group for spraying liquids products for agriculture, which are more efficient than that of the prior art.

Another object of the present invention is to provide a machine, a method and a spray group for spraying liquids products for agriculture, which are less affected by a risk of obstruction of the nozzles with respect to the prior art.

Another object of the present invention is to provide a machine, a method and a spray group for spraying liquids products for agriculture, which are simple and entirely reliable.

### Brief description of the drawings

The technical characteristics of the invention, according to the aforesaid objects, can be clearly seen in the contents of the below-reported claims and the advantages thereof will be clearer from the following detailed description, made with reference to the enclosed drawings, which represent a merely exemplifying and non-limiting embodiment of the invention in which:

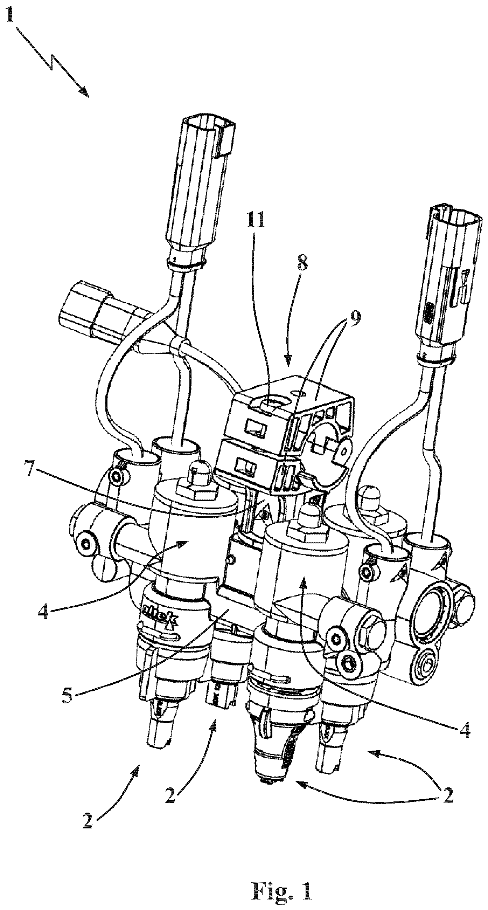

- figure 1 shows a perspective view of a spray group according to the present invention;

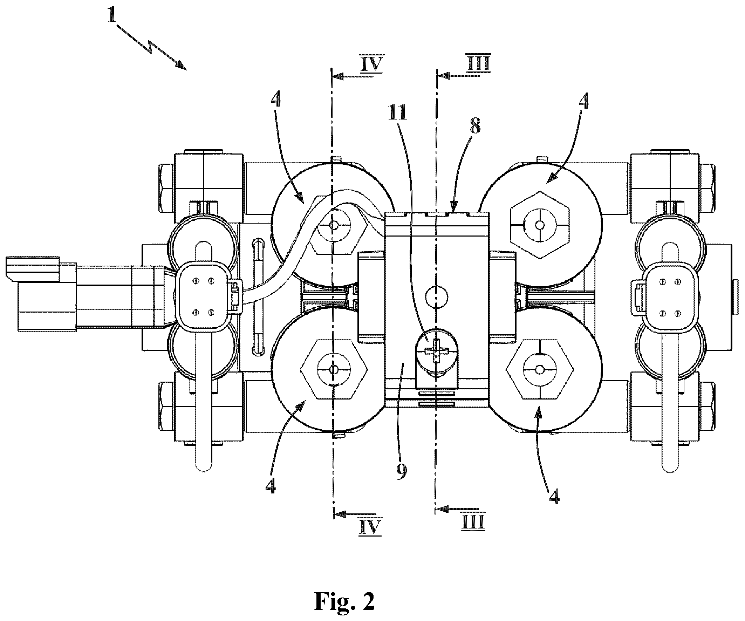

- figure 2 shows a top plan view of the spray group of figure 1;

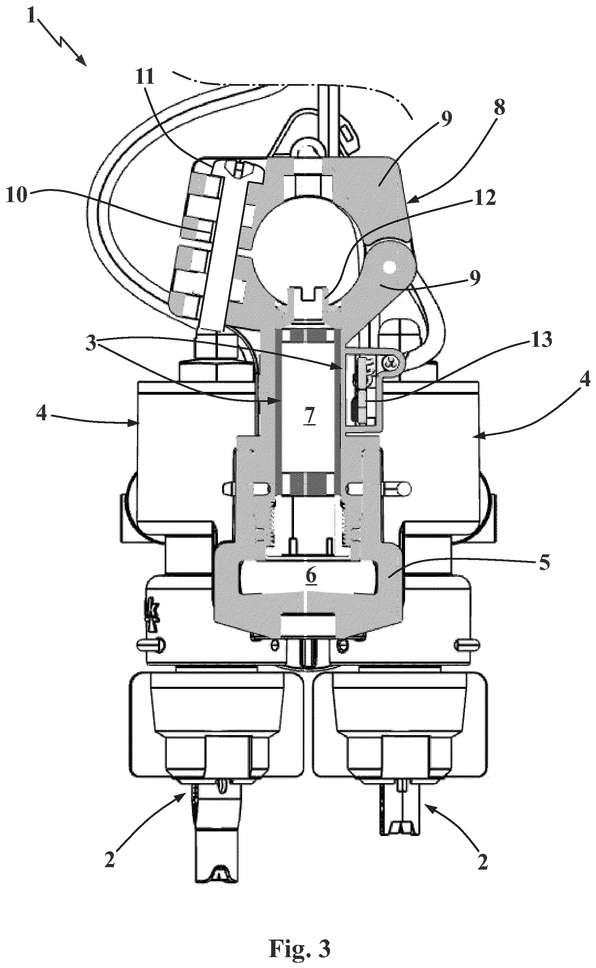

- figure 3 shows a side section view of the spray group of figure 1, in which the section was obtained along the trace III-III of figure 2;

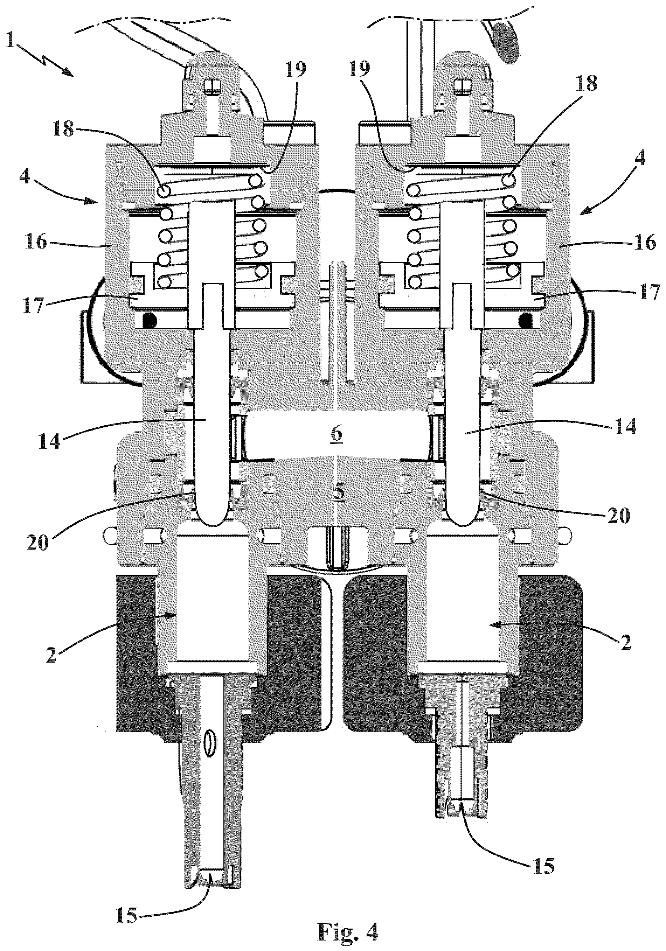

- figure 4 shows a side section view of the spray group of figure 1, in which the section was obtained along the trace IV-IV of figure 2;

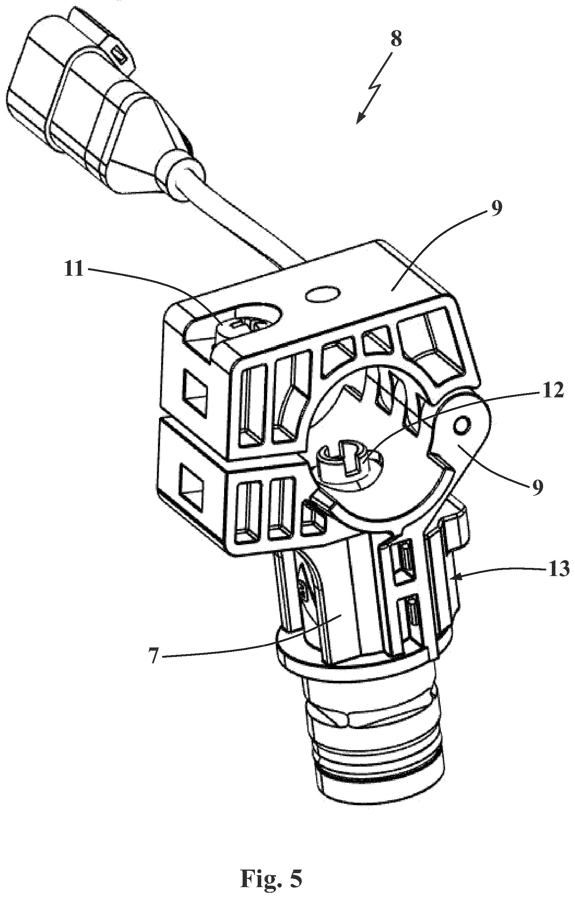

- figure 5 shows a perspective view of a gripper with branch pipe of the spray group of figure 1;

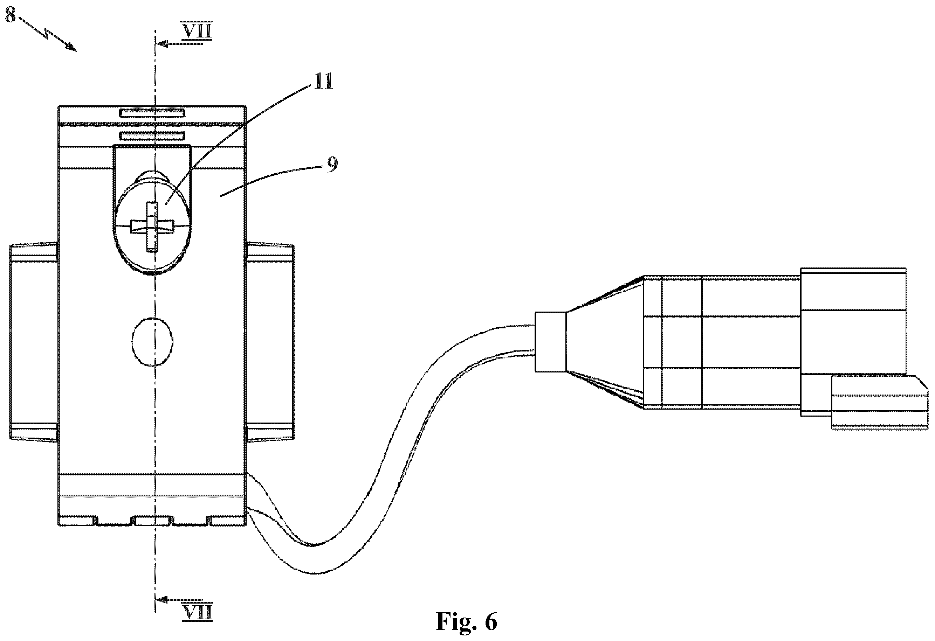

- figure 6 shows a top plan view of the gripper of figure 5;

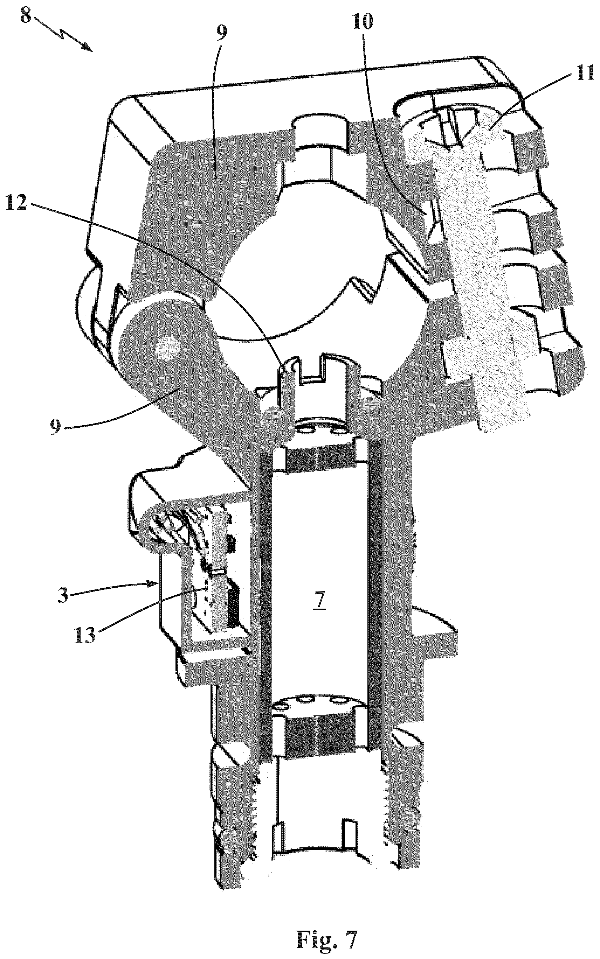

- figure 7 shows a side section view of the gripper of figure 5, in which the section was obtained along the trace VII-VII of figure 6.

### Detailed description of a preferred embodiment

With reference to the enclosed drawings, reference number 1 overall indicates a spray group for spraying liquid products for agriculture, object of the present invention.

The spray group 1 is advantageously arranged for being mounted on the spray bar of a machine for spraying liquid products for agriculture, such spray bar is preferably provided with a main pipe for the distribution of a liquid for agriculture on terrain or cultivations.

The aforesaid present spray group 1 comprises a support body 5, which is provided with at least one manifold 6, and a branch pipe 7, which is susceptible of connecting the manifold 6 to the main pipe of the spray bar.

Advantageously, in order to facilitate the mounting of the support body 5 on the spray bar, the spray group 1 comprises a gripper 8 mechanically associated with the support body 5 and provided with two jaws 9 susceptible of being engaged on the main pipe of the spray bar of the machine for spraying liquid products for agriculture.

Preferably, the branch pipe 7 is extended within a jaw 9 of the gripper 8 and is susceptible of connecting the manifold 6 to the main pipe.

In addition, the spray group 1 comprises two or more nozzles 2 mechanically connected to the support body 5 and hydraulically connected to the manifold 6, in a manner such that they can dispense the liquid coming from the spray bar that is collected in the aforesaid manifold 6.

The spray group 1 also comprises a plurality of actuators 4, each associated with a corresponding nozzle 2 in order to actuate it between at least one open configuration, in which in particular such nozzle 2 dispenses the liquid, and a closed configuration, in which in particular the aforesaid nozzle 2 is obstructed and does not dispense liquid.

In addition, the spray group 1 comprises a flow meter 3 placed to intercept the branch pipe 7 in order to measure the liquid flow directed to said manifold 6. More in detail, the flow meter 3 of the present spray group 1 is intended to be placed in data communication with control means, which can for example be a logic control unit, in particular integrated in the computer on board the machine for spraying liquid products for agriculture.

In particular, such configuration of the flow meter 3 in the branch pipe 7 has the advantage of rendering the present spray group 1 with much simpler structure, since only one flow meter 3 is provided for a specific number of nozzles 2 greater than or equal to two, which can be for example two, three, four (as illustrated in the enclosed figures) or even more.

More in detail, such spray group 1 thus has the advantage that with only one flow meter 3 it is possible to measure the liquid flow that passes through only one nozzle 2 in open configuration or a combination of multiple nozzles 2 in open configuration, thus being able to verify the correction operation of the nozzles 2 by simply comparing the actual liquid flow with a preset objective of flow of liquid to be dispensed, and on the basis of such preset objective, the opening or closing of each nozzle 2 was commanded.

In addition, due to the arrangement of the flow meter 3 in the branch pipe 7, it is possible to reduce the risk of obstruction of the nozzles 2, since the flow meter 3 does not reduce the section for the passage of liquid present within the same nozzles 3, but rather it is placed in the branch pipe 7 which is advantageously provided with a larger liquid passage section, since it is arranged for providing the liquid to a manifold 6 that feeds multiple nozzles 2.

Also forming the object of the present invention is a machine for spraying liquid products for agriculture, which, as is better described below, is provided with a plurality of spray groups 1, of the type described above.

For the sake of simplicity, any characteristic referred to the spray group(s) 1 of the machine described hereinbelow are to be considered as referrable also to the spray group 1 described above.

The present machine comprises a spray bar (not illustrated) provided with at least one main pipe for the distribution of a liquid for agriculture on terrain or cultivations, a plurality of nozzles 2 hydraulically connected to the main pipe in order to receive from the latter the liquid to be dispersed, a plurality of flow meters 3 adapted to detect a liquid flow, a plurality actuators 4, each associated with a corresponding nozzle 2 in order to actuate it between at least one open configuration and at least one closed configuration, and control means in signal communication with the flow meters 3 and with the actuators 4 of the nozzles 2 in order to command the opening and closing of the aforesaid nozzles 2.

According to the idea underlying the present invention, the machine for spraying liquid products for agriculture comprises a plurality of spray groups 1, each comprising a support body 5 provided with at least one manifold 6, a branch pipe 7 that connects the main pipe of the spray bar to the manifold 6, two or more of the aforesaid nozzles 2 mechanically connected to the support body 5 and hydraulically connected to the manifold 6 and a flow meter 3, which is in data communication with the control unit and is placed to intercept the branch pipe 7 in order to measure the liquid flow directed to the manifold 6.

Still according to the idea underlying the present invention, the control means are configured for controlling the single actuators 4 of the corresponding two or more nozzles 2 of each spray group 1.

In this manner, the control means can monitor the correct operation of the nozzles 2 of each spray group 1 mounted on the spray bar by simply controlling the measurements of liquid flow provided by the flow meter 3 of each spray group 1. This provides the advantage that, by comparing the measurement of actual liquid flow with an objective of flow of liquid to be dispensed set for a specific combination of nozzles 2 in open configuration, it is possible to verify the correct verification of all the nozzles 2 of all the spray groups 1 by employing only an overall number of flow meters 3 that is equal to the number of spray groups 1 divided by the number of nozzles 2 of each of the spray groups 1.

Indeed, in operation, in the event in which in each spray group 1, only one nozzle 2 was commanded in open configuration and the liquid flow measured by the flow meter 3 in the corresponding branch pipe 7 is different from the flow objective associated with that particular nozzle 2 in open configuration, then the control means can detect that such nozzle 2 is malfunctioning.

In addition, in operation, in the event in which, in each spray group 1, a particular combination of nozzles 2 in open configuration has been commanded and the liquid flow measured by the flow meter 3 in the corresponding branch pipe 7 is different from the objective of flow associated with that particular combination of nozzles 2 in open configuration, then the control means can detect that one of such nozzles 2 in open configuration is affected by malfunctioning.

Advantageously, the nozzles 2 of each spray group 1 comprise at least two nozzles 2 with different spray flow.

Preferably, all the nozzles 2 of each spray group 1 have different spray flow.

In particular, all the spray groups 1 are identical to each other and provided with nozzles 2 that all have different spray flow.

As an alternative or in addition, the nozzles 2 of each spray group 1 comprise at least two nozzles 2 with different spray modes, e.g. with fan jet, with empty cone, with pointed arch, and the like.

Advantageously, as described above, in order to mount the spray groups 1 on the spray bar, each spray group 1 comprises a gripper 8 mechanically associated with the support body 5 and provided with two jaws 9 susceptible of being engaged on the main pipe of the spray bar.

Preferably, the branch pipe 7 is extended within a jaw 9 of the gripper 8.

More in detail, the jaws 9 of the gripper 8 are hinged to each other and have, in particular, substantially curved form, in a manner such to be able to close around the aforesaid spray bar.

In addition, each jaw 9 is advantageously crossed, in particular at its free end, by a hole 10, which is aligned with the hole of the jaw 9 when they are closed against each other and it is susceptible of being engaged by a closure screw 11, so as to prevent the jaws 9 from being opened during use.

In addition, the jaw 9, within which the branch pipe 7 is extended, is preferably provided with a flow spout 12, which is intended to be at least partially inserted in a suitable opening made on the main pipe of the spray bar in order to allow the passage of the fluid to be sprayed from the latter to the branch pipe 7 itself.

Advantageously, the flow meter 3 of each spray group 7 is of magnetic type.

Preferably, such flow meter 3 of magnetic type comprises a turbine (not illustrated), which is inserted within the branch pipe 7, is susceptible of rotating around a rotation axes thereof when the liquid to be distributed flows into the aforesaid branch pipe 7 and carries a magnet mounted thereon, and a Hall effect sensor 13, which is mounted externally on the branch pipe 7 at the turbine and is arranged in order to measure the liquid flow as a function of the number of revolutions of the magnet of the turbine around the rotation axis per unit of time. More in detail, the turbine is provided with a rotor and with multiple blades and, in particular, the magnet can be integrated in the rotor or in at least one of the blades.

In particular, the arrangement in the branch pipe 7 of the flow meter 3 with turbine and with Hall effect sensor 13 reduces the risk that the nozzles 2 can be obstructed by solid residues in suspension in the fluid, given that the aforesaid flow meter 3 does not reduce the passage section for the liquid inside the nozzles 2 themselves.

Advantageously, in order to allow a correct and easy detection by the control means of the measurement of the liquid flow that traverses the branch pipe 7, the flow meter 3 is arranged for generating a measurement signal with voltage substantially comprised between 0.5 and 4.5 V for actual liquid flows substantially comprised between 0.25 and 9.6 l/min. In particular, in the aforesaid voltage intervals and actual liquid flows, the flow meter 3 is arranged for generating the aforesaid measurement signal with linear response. Such configuration of the flow meter 3 thus allows advantageously measuring, with precision, also the considerable liquid flows that cross the branch pipe 7 when all the nozzles 2 of the corresponding spray group 1 are in open configuration.

Advantageously, the control means comprise a setting module, in which data for spraying liquid on the ground is pre-settable, and a command module programmed for controlling the single actuators 4 of the one or more nozzles 2 of each spray group 1 as a function of the spray data.

In particular, the setting module can be programmable for directly setting an objective of flow of liquid to be dispensed (e.g. by means of a user interface in which the operator driving the machine inserts a particular objective of flow) or it can be set indirectly by the same setting module as a function, for example, of a particular area in which the machine is situated on an application map (in particular GPS), as a function of the particular cultivation or terrain to be sprayed, and/or as a function also of the advancing speed of the machine on the ground, and the like.

Advantageously, in order to allow detecting the correct operation of the nozzles 2 and possibly allow the control means to make provisions in case of malfunction, the control means comprise a monitoring module arranged for comparing an objective of flow of liquid to be dispensed, and such objective of flow is preferably obtained from the spray data provided by the setting module, with the liquid flow measured by the flow meters 3.

In this manner, if the command module has commanded, in open configuration, a single nozzle 2 of each spray group 1, the monitoring module can detect, based on the signal generated by the flow meter 3 of the corresponding spray group 1, if the aforesaid nozzle 2 operates correctly or not.

Otherwise, if the command module has commanded in open configuration a particular combination of nozzles 2 of each spray group 1, the monitoring module can detect, based on the signal generated by the flow meter 3 of the corresponding spray group 1, if one of such nozzles 2 in open configuration operates correctly or not.

Preferably, the control means comprise a signaling module arranged for sending an alarm signal when the monitoring module detects a divergence between the liquid flow measured by at least one of the flow meters 3 and the aforesaid objective of flow.

In particular, the divergence between measured liquid flow and the objective of flow of liquid that must be there in order for the monitoring module to send an alarm signal, is preferably substantially equal to or greater than 15% of the objective of flow of liquid.

More in detail, the signaling module is operatively connected to a monitor or to acoustic emission means, in a manner such to transfer the alarm signal to the operator who drives the machine, allowing him/her to intervene in order to execute a maintenance of the particular nozzle 2 that was identified as malfunctioning.

Advantageously, the control means are configured for controlling the single actuators 4 of the one or more nozzles 2 of each spray group 1 as a function of the flow of the liquid flow measured by the flow meter 3.

Preferably, as an alternative or in addition to the possibility of sending an alarm signal, the command module of the control means can also be arranged in order to command the actuators 4, each independent from the others, in order to switch the nozzles 2 between the open position and the closed position in a different combination when the monitoring module detects a divergence between the liquid flow measured by at least one of the flow meters 3 and the objective of flow.

In this manner, the control means can intervene in order to seek to compensate for the malfunctioning of a particular nozzle 2, by commanding another combination of nozzles 2 of the same spray group 1, such to bring the liquid flow actually measured by the flow meter 3 back as close as possible to the objective of flow.

In this case, it is therefore possible that the control means maintain the nozzles 2 of each spray group 1 in the same combination of open and closed configurations, while they command, in a different combination of open and closed configurations, the nozzles 2 of the spray group 1 provided with at least one non-operating nozzle 2, in order to prevent as much as possible a non-uniform distribution of the liquid on the fields or cultivations.

More in detail, with setting module, command module and monitoring module, it is intended specific functions integrated in the software of the command means, which can be an electronic control unit, such as for example a control unit.

Advantageously, the nozzles 2 comprise dispensing openings 15 arranged for spraying the liquid to be dispensed and, in addition, in order to be able to pass between the open configuration and the closed configuration, they each carry, integrated therewith, a corresponding shutter 14 movable away from (in the open configuration) and to intecept (in closed configuration) a passage opening 20 which places the manifold 6 in fluid communication with the respective dispensing opening 15.

In particular, as illustrated in the enclosed figures, such shutters 14 are of the type with piston and are linearly movable.

In accordance with the embodiment illustrated in the enclosed figures, the actuators 4 of the nozzles 2 each comprise a jacket 16, an actuation piston 17 slidably inserted in the aforesaid jacket 16 and fixed to the corresponding shutter 14 in order to move it, consequently switching the corresponding nozzle 2 between the open configuration and the closed configuration, and means for feeding a pressurized fluid (e.g. compressed air) arranged for conveying the aforesaid pressurized fluid against the actuation piston 17 by making it slide in the jacket 16.

Advantageously, in order to increase the operative safety of the nozzles 2, the actuators 4 comprise elastic means 18 interposed between an abutment wall 19 of the jacket 16 and the actuation piston 17, arranged for forcing, through the aforesaid actuation piston 17, the shutter 14 to intercept the respective dispensing opening 15 and susceptible of elastically yielding when the feeding means convey the pressurized fluid against the aforesaid actuation piston 17 in order to allow it to be moved away from the dispensing opening 15 itself.

In particular, the feeding means of the actuators 4 are controlled, by means of solenoid valves, by the control means.

Also forming the object of the present invention is a method for the distribution of liquid products for agriculture on field or cultivations, by means of the above-described machine for spraying liquid products for agriculture.

Such method provides for arranging control means provided with a setting module in which data for spraying liquid on the ground is presettable (by means of which, for example, the operator who drives the machine can directly insert, by means of a user interface, an objective of flow of liquid to be dispensed, or the same setting module can set an objective of flow of liquid as a function of the particular area on an application GPS map where the machine is situated) and with a command module programmed for controlling the single actuators 4 of the one or more nozzles 2 of each spray group 1 as a function of the spray data.

In addition, such method provides for setting the aforesaid setting module with at least the objective of flow of liquid to be distributed on the ground or on the cultivation through each spray group 1.

The present method also provides that the control means actuate the single actuators 4, on their own or in combination, of said corresponding two or more nozzles 2 of each spray group 1, as a function of the objective of flow of liquid to be distributed.

Advantageously, the present method provides that control means monitor the actual flow dispensed by each spray group 1 (i.e. by the nozzles 2 in open configuration of each spray group 1, in which, in particular, the nozzles 2 in open configuration have been commanded as a function of the objective of liquid flow to be dispensed) by means of the corresponding flow meter 3 and that the aforesaid control means send an alarm signal (e.g. to a monitor or to acoustic signaling means in the cabin of the machine) if a divergence is verified between the liquid flow measured by the flow meter 3 in the branch pipe 7 and the objective of flow of liquid (where such divergence is for example substantially equal to or greater than the 15% of the liquid flow objective).

In addition, the present method can advantageously provide that the control means monitor the actual flow dispensed by each spray group 1 (i.e. by the nozzles 2 in open configuration of each spray group 1, in which, in particular, the nozzles 2 in open configuration have been commanded as a function of the objective of flow of liquid to be dispensed) by means of the corresponding flow meter 3 and that the aforesaid control means actuate the actuators 4 of the corresponding two or more nozzles 2 of each spray group 1 in order to approximate the objective of flow of liquid to be distributed through spray groups 1.

In this manner, if a malfunctioning is verified (e.g. breakage or obstruction) of one of the nozzles 2 of a spray group 1, the control means can detect, from the liquid flow actually measured due to the corresponding flow meter 3, that a failure has been verified that does not allow the aforesaid spray group 1 to dispense the liquid flow objective established with the particular combination of nozzles 2 in open configuration. Therefore, in this manner, the control means can select a different combination of nozzles 2 in open configuration on the aforesaid spray group 1 in a manner such to be able to bring the overall liquid flow dispensed by such spray group 1 back as close as possible to the objective of flow of liquid to be dispensed.

The invention thus conceived therefore attains the pre-established objects.

## Claims

1. Machine for spraying liquid products for agriculture, which comprises:
- a spray bar provided with at least one main pipe for the distribution of a liquid for agriculture on terrain or cultivations;
- a plurality of nozzles (2) hydraulically connected to said main pipe in order to receive from the latter the liquid to be dispersed;
- a plurality of flow meters (3) adapted to detect a liquid flow;
- a plurality of actuators (4) each associated with a corresponding nozzle (2) in order to actuate it between at least one open configuration and at least one closed configuration;
- control means in signal communication with said flow meters (3) and with the actuators (4) of said nozzles (2) in order to command the opening and closing of said nozzles (2);
- a plurality of spray groups (1), each comprising:
- a support body (5) provided with at least one manifold (6);
- a branch pipe (7), which connects the main pipe of said spray bar to said manifold (6);
- two or more of said nozzles (2) mechanically connected to said support body (5) and hydraulically connected to said manifold (6); **characterized by** one said flow meter (3) being in data communication with said control means and placed to intercept said branch pipe (7) in order to measure the flow of said liquid directed to said manifold (6);
said control means being configured for controlling the single actuators (4) of the corresponding said two or more nozzles (2) of each said spray group (1).

2. Machine according to claim 1, **characterized in that** said control means comprise:
- a setting module in which data for spraying liquid on the ground is pre-settable,
- a command module programmed for controlling the single actuators (4) of said one or more nozzles (2) of each said spray group (1) as a function of the spray data.

3. Machine according to claim 2, **characterized in that** said control means comprise a monitoring module arranged for comparing the liquid flow measured by said flow meters (3) with an objective of flow of liquid to be dispensed, in which said objective of flow is obtained from said spray data provided by said setting module.

4. Machine according to claim 3, **characterized in that** said control means comprise a signaling module arranged for sending an alarm signal when said monitoring module detects a divergence between the liquid flow measured by at least one of said flow meters (3) and said objective of flow.

5. Machine according to any one of the preceding claims, **characterized in that** said control means are configured for controlling the single actuators (4) of said one or more nozzles (2) of each said spray group (1) as a function of the liquid flow measured by said flow meter (3).

6. Machine according to claim 3 or 4 and 5, **characterized in that** the command module of said control means is arranged for commanding said actuators (4), each independent from the others, in order to switch the nozzles (2) between the open configuration and the close configuration in a different combination when said monitoring module detects a divergence between the liquid flow measured by at least one of said flow meters and said objective of flow.

7. Machine according to one or more of the preceding claims, **characterized in that** the nozzles (2) of each said spray group (1) comprise at least two nozzles (2) with different spray flow and/or with different spray modes.

8. Method for spraying liquid products for agriculture on fields or cultivations, by means of the machine according to any one of the preceding claims, which provides for:
- arranging control means provided with:
- a setting module in which data for spraying liquid on the ground is pre-settable;
- a command module programmed for controlling the single actuators (4) of said one or more nozzles (2) of each said spray group (1) as a function of the spray data;
- setting said setting module with at least one objective of flow of liquid to be distributed on the ground or on the cultivation through each spray group (1);
- and that said control means actuate the single actuators (4), on their own or in combination, of said corresponding two or more nozzles (2) of each said spray group (1), as a function of the objective of liquid of flow to be distributed.

9. Method according to claim 8, which provides that said control means monitor the actual flow dispensed by each spray group (1) by means of the corresponding said flow meter (3) and that said control means actuate the actuators (4) of said corresponding two or more nozzles (2) of each said spray group (1) in order to approximate the objective of flow of liquid to be distributed through said spray groups (1).

10. Spray group (1) for spraying liquid products for agriculture, which comprises:
- a support body (5) provided with a manifold (6);
- a gripper (8) mechanically associated with said support body (5) and provided with two jaws (9) susceptible of being engaged on the main pipe of a spray bar of a farming machine;
- a branch pipe (7), which is extended within a jaw (9) of said gripper (8) and is susceptible of connecting said manifold (6) to said main pipe;
- two or more nozzles (2) mechanically connected to said support body (5) and hydraulically connected to said manifold (6) in order to receive, from the latter, the liquid to be dispersed;
- a plurality actuators (4), each associated with a corresponding nozzle (2) of said spray group (1) in order to actuate it between at least one open configuration and at least one closed configuration;
- a flow meter (3) placed to intercept said branch pipe (7) in order to control the liquid flow directed to said manifold (6).

## Patentansprüche

1. Maschine zum Versprühen von flüssigen Produkten für die Landwirtschaft, die Folgendes umfasst:
- einen Sprühbalken mit mindestens einer Hauptleitung zum Verteilen einer Flüssigkeit für die Landwirtschaft auf dem Gelände oder auf Anbauflächen;
- eine Vielzahl von Düsen (2), die hydraulisch an die genannte Hauptleitung angeschlossen sind, um von Letzterer die zu verteilende Flüssigkeit zu erhalten;
- eine Vielzahl von Durchflussmessern (3), die geeignet sind, einen Flüssigkeitsstrom zu erkennen;
- eine Vielzahl von Stellantrieben (4), die jeweils mit einer entsprechenden Düse (2) verbunden sind, um diese zwischen mindestens einer geöffneten und mindestens einer geschlossenen Konfiguration zu betätigen;
- Steuermittel in Signalverbindung mit den genannten Durchflussmessern (3) und mit den Stellantrieben (4) der genannten Düsen (2), um das Öffnen und Schließen der genannten Düsen (2) zu steuern;
- eine Vielzahl von Sprühgruppen (1), die jeweils Folgendes umfassen:
- einen Trägerkörper (5), der mit mindestens einem Verteiler (6) versehen ist;
- eine Abzweigleitung (7), die die Hauptleitung des genannten Sprühbalkens an den genannten Verteiler (6) anschließt;
- zwei oder mehr der genannten Düsen (2), die mechanisch an den genannten Trägerkörper (5) und hydraulisch an den genannten Verteiler (6) angeschlossen sind;
**dadurch gekennzeichnet, dass** einer der genannten Durchflussmesser (3) in Datenkommunikation mit den genannten Steuermitteln steht und so angeordnet ist, dass er auf die genannte Abzweigleitung (7) trifft, um den zu dem genannten Verteiler (6) geleiteten Strom der genannten Flüssigkeit zu messen;
wobei die genannten Steuermittel darauf ausgelegt sind, die einzelnen Stellantriebe (4) der entsprechenden genannten zwei oder mehr Düsen (2) jeder genannten Sprühgruppe (1) zu steuern.

2. Maschine nach Anspruch 1, **dadurch gekennzeichnet, dass** die genannten Steuermittel Folgendes umfassen:
- ein Einstellmodul, in dem Daten zum Versprühen von Flüssigkeit auf den Boden voreinstellbar sind,
- ein Befehlsmodul, das dazu programmiert ist, die einzelnen Stellantriebe (4) der genannten einen oder mehreren Düsen (2) jeder genannten Sprühgruppe (1) in Abhängigkeit von den Sprühdaten zu steuern.

3. Maschine nach Anspruch 2, **dadurch gekennzeichnet, dass** die genannten Steuermittel ein Überwachungsmodul umfassen, das dazu eingerichtet ist, den von den genannten Durchflussmessern (3) gemessenen Flüssigkeitsstrom mit einer Zielvorgabe des zu verteilenden Flüssigkeitsstroms zu vergleichen, wobei die genannte Zielvorgabe des Stroms aus den von dem genannten Einstellmodul bereitgestellten Sprühdaten erhalten wird.

4. Maschine nach Anspruch 3, **dadurch gekennzeichnet, dass** die genannten Steuermittel ein Signalisierungsmodul umfassen, das dazu eingerichtet ist, ein Alarmsignal zu versenden, wenn das genannte Überwachungsmodul eine Abweichung zwischen dem von mindestens einem der genannten Durchflussmesser (3) gemessenen Flüssigkeitsstrom und der genannten Zielvorgabe des Stroms erkennt.

5. Maschine nach einem beliebigen der vorangegangenen Ansprüche, **dadurch gekennzeichnet, dass** die genannten Steuermittel darauf ausgelegt sind, die einzelnen Stellantriebe (4) der genannten einen oder mehreren Düsen (2) jeder genannten Sprühgruppe (1) in Abhängigkeit von dem von dem genannten Durchflussmesser (3) gemessenen Flüssigkeitsstrom zu steuern.

6. Maschine nach Anspruch 3 oder 4 und 5, **dadurch gekennzeichnet, dass** das Befehlsmodul der genannten Steuermittel dazu eingerichtet ist, die jeweils voneinander unabhängigen genannten Stellantriebe (4) anzusteuern, um die Düsen (2) zwischen der geöffneten Konfiguration und der geschlossenen Konfiguration in eine andere Kombination umzuschalten, wenn das genannte Überwachungsmodul eine Abweichung zwischen dem von mindestens einem der genannten Durchflussmesser gemessenen Flüssigkeitsstrom und der genannten Zielvorgabe des Stroms erkennt.

7. Maschine nach einem oder mehreren der vorangegangenen Ansprüche, **dadurch gekennzeichnet, dass** die Düsen (2) jeder genannten Sprühgruppe (1) mindestens zwei Düsen (2) mit unterschiedlichem Sprühstrom und/oder mit unterschiedlichen Sprühmodi umfassen.

8. Verfahren zum Versprühen von flüssigen Produkten für die Landwirtschaft auf Feldern oder Anbauflächen mittels der Maschine nach einem beliebigen der vorangegangenen Ansprüche, das Folgendes vorsieht:
- Einrichten von Steuermitteln, die über Folgendes verfügen:
- ein Einstellmodul, in dem die Daten zum Versprühen von Flüssigkeit auf den Boden voreinstellbar sind;
- ein Befehlsmodul, das dazu programmiert ist, die einzelnen Stellantriebe (4) der genannten einen oder mehreren Düsen (2) jeder genannten Sprühgruppe (1) in Abhängigkeit von den Sprühdaten zu steuern;
- Einstellen des genannten Einstellmoduls mit mindestens einer Zielvorgabe des auf dem Boden oder auf der Anbaufläche über jede Sprühgruppe (1) zu verteilenden Flüssigkeitsstroms;
- und dass die genannten Steuermittel die einzelnen Stellantriebe (4) der genannten entsprechenden zwei oder mehreren Düsen (2) jeder genannten Sprühgruppe (1), allein oder in Kombination, in Abhängigkeit von der Zielvorgabe der zu verteilenden Flüssigkeit betätigen.

9. Verfahren nach Anspruch 8, das vorsieht, dass die genannten Steuermittel den tatsächlichen von jeder Sprühgruppe (1) verteilten Strom mit Hilfe des entsprechenden genannten Durchflussmessers (3) überwachen, und dass die genannten Steuermittel die Stellantriebe (4) der genannten entsprechenden zwei oder mehreren Düsen (2) jeder genannten Sprühgruppe (1) betätigen, um sich der Zielvorgabe des über die genannten Sprühgruppen (1) zu verteilenden Flüssigkeitsstroms anzunähern.

10. Sprühgruppe (1) zum Versprühen von flüssigen Produkten für die Landwirtschaft, die Folgendes umfasst:
- einen Trägerkörper (5), der mit einem Verteiler (6) versehen ist;
- einen Greifer (8), der mechanisch mit dem genannten Trägerkörper (5) verbunden und mit zwei Spannbacken (9) versehen ist, die geeignet sind, auf der Hauptleitung eines Sprühbalkens einer Landmaschine in Eingriff gebracht zu werden;
- eine Abzweigleitung (7), die im Inneren einer Spannbacke (9) des genannten Greifers (8) verläuft und geeignet ist, den genannten Verteiler (6) an die genannte Hauptleitung anzuschließen;
- zwei oder mehr Düsen (2), die mechanisch an den genannten Trägerkörper (5) und hydraulisch an den genannten Verteiler (6) angeschlossen sind, um von Letzterem die zu verteilende Flüssigkeit zu erhalten;
- eine Vielzahl von Stellantrieben (4), die jeweils mit einer entsprechenden Düse (2) der genannten Sprühgruppe (1) verbunden sind, um diese zwischen mindestens einer geöffneten und mindestens einer geschlossenen Konfiguration zu betätigen;
- einen Durchflussmesser (3), der dazu angeordnet ist, auf die genannte Abzweigleitung (7) zu treffen, um den zu dem genannten Verteiler (6) geleiteten Flüssigkeitsstrom zu steuern.

## Revendications

1. Machine à pulvériser des produits liquides pour l'agriculture, comprenant :
- un longeron de pulvérisation pourvu d'au moins un tuyau principal pour la distribution d'un liquide pour l'agriculture sur le terrain ou les cultures ;
- une pluralité de buses (2) reliées hydrauliquement audit tuyau principal afin de recevoir de ce dernier le liquide à disperser ;
- une pluralité de débitmètres (3) aptes à détecter un débit de liquide ;
- une pluralité d'actionneurs (4) associés chacun à une buse (2) correspondante afin de l'actionner entre au moins une configuration ouverte et au moins une configuration fermée ;
- des moyens de commande en communication de signal avec lesdits débitmètres (3) et avec les actionneurs (4) desdites buses (2) afin de commander l'ouverture et la fermeture desdites buses (2) ;
- une pluralité de groupes de pulvérisation (1), chacun comprenant :
- un corps de support (5) pourvu d'au moins un collecteur (6) ;
- un tuyau de dérivation (7), qui relie le tuyau principal dudit longeron de pulvérisation audit collecteur (6) ;
- deux ou plusieurs desdites buses (2) reliées mécaniquement audit corps de support (5) et reliées hydrauliquement audit collecteur (6) ;
**caractérisée en ce que** un desdits débitmètre (3) est en communication de données avec lesdits moyens de commande et placé pour intercepter ledit tuyau de dérivation (7) afin de mesurer le débit dudit liquide dirigé vers ledit collecteur (6) ;
lesdits moyens de commande étant configurés pour commander les actionneurs (4) individuels desdites deux ou plusieurs buses (2) correspondantes de chaque dit groupe de pulvérisation (1).

2. Machine selon la revendication 1, **caractérisée en ce que** lesdits moyens de commande comprennent :
- un module de réglage dans lequel les données relatives à la pulvérisation de liquide sur le sol sont préréglables,
- un module de contrôle programmé pour commander les actionneurs (4) individuels desdites une ou plusieurs buses (2) de chaque dit groupe de pulvérisation (1) en fonction des données de pulvérisation.

3. Machine selon la revendication 2, **caractérisée en ce que** lesdits moyens de commande comprennent un module de surveillance agencé pour comparer le débit de liquide mesuré par lesdits débitmètres (3) à un objectif de débit de liquide à délivrer, où ledit objectif de débit est obtenu à partir desdites données de pulvérisation fournies par ledit module de réglage.

4. Machine selon la revendication 3, **caractérisée en ce que** lesdits moyens de commande comprennent un module de signalisation agencé pour envoyer un signal d'alarme lorsque ledit module de surveillance détecte une divergence entre le débit de liquide mesuré par au moins l'un desdits débitmètres (3) et ledit objectif de débit.

5. Machine selon l'une quelconque des revendications précédentes, **caractérisée en ce que** lesdits moyens de commande sont configurés pour commander les actionneurs (4) individuels desdites une ou plusieurs buses (2) de chaque dit groupe de pulvérisation (1) en fonction du débit de liquide mesuré par ledit débitmètre (3).

6. Machine selon la revendication 3 ou 4 et 5, **caractérisée en ce que** le module de contrôle desdits moyens de commande est agencé pour contrôler lesdits actionneurs (4), chacun indépendant des autres, afin de commuter les buses (2) entre la configuration ouverte et la configuration fermée dans une combinaison différente lorsque ledit module de surveillance détecte une divergence entre le débit de liquide mesuré par au moins l'un desdits débitmètres et ledit objectif de débit.

7. Machine selon l'une ou plusieurs des revendications précédentes, **caractérisée en ce que** les buses (2) de chaque dit groupe de pulvérisation (1) comprennent au moins deux buses (2) avec un débit de pulvérisation différent et/ou avec des modes de pulvérisation différents.

8. Procédé pour pulvériser des produits liquides pour l'agriculture sur des champs ou des cultures, au moyen de la machine selon l'une quelconque des revendications précédentes, qui prévoit :
- agencer des moyens de commande pourvus de :
- un module de réglage dans lequel les données relatives à la pulvérisation de liquide sur le sol sont préréglables ;
- un module de contrôle programmé pour commander les actionneurs (4) individuels desdites une ou plusieurs buses (2) de chaque dit groupe de pulvérisation (1) en fonction des données de pulvérisation ;
- régler ledit module de réglage avec au moins un objectif de débit de liquide à distribuer sur le sol ou sur la culture par le biais de chaque groupe de pulvérisation (1) ;
- et que lesdits moyens de commande actionnent les actionneurs (4) individuels, seuls ou en combinaison, desdites deux ou plusieurs buses (2) correspondantes de chaque dit groupe de pulvérisation (1), en fonction de l'objectif de débit de liquide à distribuer.

9. Procédé selon la revendication 8, qui prévoit que lesdits moyens de commande surveillent le débit réel délivré par chaque groupe de pulvérisation (1) au moyen dudit débitmètre (3) correspondant, et que lesdits moyens de commande actionnent les actionneurs (4) desdites deux ou plusieurs buses (2) correspondantes de chaque dit groupe de pulvérisation (1) afin d'approcher l'objectif de débit de liquide à distribuer par le biais desdits groupes de pulvérisation (1).

10. Groupe de pulvérisation (1) pour pulvériser des produits liquides pour l'agriculture, comprenant :
- un corps de support (5) pourvu d'un collecteur (6) ;
- une pince (8) associée mécaniquement audit corps de support (5) et pourvue de deux mâchoires (9) susceptibles d'être engagées sur le tuyau principal d'un longeron de pulvérisation d'une machine agricole ;
- un tuyau de dérivation (7), qui s'étend à l'intérieur d'une mâchoire (9) de ladite pince (8) et qui est susceptible de relier ledit collecteur (6) audit tuyau principal ;
- deux ou plusieurs buses (2) reliées mécaniquement audit corps de support (5) et reliées hydrauliquement audit collecteur (6) afin de recevoir, de ce dernier, le liquide à disperser ;
- une pluralité d'actionneurs (4), associés chacun à une buse (2) correspondante dudit groupe de pulvérisation (1) afin de l'actionner entre au moins une configuration ouverte et au moins une configuration fermée ;
- un débitmètre (3) placé pour intercepter ledit tuyau de dérivation (7) afin de commander le débit de liquide dirigé vers ledit collecteur (6).
